# EUROPEAN PATENT APPLICATION

(11) **EP 2 243 970 A1**
(43) Date of publication of application: **27.10.2010**
(21) Application number: 10160527.7
(22) Date of filing: 21.04.2010
(51) Int. Cl.: F16B 13/06, F16B 13/08

(54) **Double collar wedge anchor**

(30) Priority: 22.04.2009 US 171482 P
(71) Applicant: Kaplan, Stanley, New York, NY 11729 (US); Hyman, Steven M., New York, NY 11729 (US)
(72) Inventor: Kaplan, Stanley, New York, NY 11729 (US); Hyman, Steven M., New York, NY 11729 (US)
(74) Representative: Körber, Martin Hans

(57) **Abstract**

A solid masonry and hollow block fastening device that uses two expansion collars (40,42;76,78;84,86) to secure a fastening thereof in varied masonry materials. In greater particularity, the two expansion collars (40,42;76,78;84,86) are interconnected by a bridge of a unitary construction therewith in order to enhance the strength and holding power thereof when mounted on masonry material.

## Description

### CROSS REFERENCE TO RELATED APPLICATION

This application claims the benefit of U.S. Provisional Application No. 61/171,482, filed on April 22, 2009.

### BACKGROUND OF THE INVENTION

### 1. Field of the Invention

The present invention relates to a solid masonry and hollow block fastening device that uses two expansion collars to secure a fastening thereof in varied masonry materials. In greater particularity, the two expansion collars are interconnected by a bridge of a unitary construction therewith in order to enhance the strength and holding power thereof when mounted on masonry material.

### 2. Discussion of the Prior Art

In general, the utilization of wedge anchors possessing two tapers and a threaded bolt structure is known in the art, having specific reference to Frischmann, et al., U.S. Patent No. 5,211,512.

Moreover, a web element in the form of a bridge connecting two tapers on a pair of wedge anchors located on an expansion dowel is also disclosed in Herb, U.S. Patent No. 4,806,053. The provision of two wedge anchors that are interconnected by a web or bridge imparts a greater degree of anchoring strength to the overall expansion dowel. Nevertheless, the employment of a plurality of discrete or separate components forming the bridging connections between the two wedge anchors limits the increase in strength in comparison with the use of only a single tapered wedge anchor when deployed in masonry materials. Although, both of these patents seem to fulfill their intended functions, they are subject to limitations as to their strengths in forming fastening devices employed in solid masonry anchoring and securing applications.

Further publications which are concerned with different types of masonry anchoring and fastening devices include French Patent No. 2,304,813 which discloses the structure of an expansion or spreader bolt for well fitting, that incorporates three wedge anchors each encompassed by a separate expandable sleeve member.

Other patents which to various extents are directed to masonry or concrete fastening device, may be ascertained from the disclosures of Herb, U.S. Patent Nos. 4,579,490 as well as Kaplan, U.S. Patent Nos. 3,717,322; 3,216,305; 3,667,341; 5,006,023. However, none of these publications discloses a double collar wedge anchor arrangement of the type under consideration herein.

### SUMMARY OF THE INVENTION

In order to improve upon the capabilities of tapered wedge anchors as are currently known, the present invention provides for a metal collar or ring-shaped member that extends about each respective taper of a pair of spaced wedge anchors, wherein the collars are connected by means of a bridge that is constructed integral with the collars. Moroever, in order to eliminate relative rotation between the wedge anchors, a flat or groove is cut into one of the wedge anchors for receiving the bridge, as elucidated more specifically hereinbelow.

Multiple collars on masonry devices provide for greater holding power or retentive strengths than fasteners with just one locking or fastening area. Tests conducted in the industry have evidenced a 50% increase in holding or anchoring power or strength utilizing two collars rather than only a single collar. The collars are deployed at specified distances from each other, whereby one collar cannot expand without the other collar following suit therewith. Since concrete psi increases with depth, a close proximity of the collars to each other is critical; since if the collars are spaced too far apart from each other, the bottom collar inserted into the masonry material will meet with a greater resistance and, consequently, the upper collar will not attain the same degree of expansion. An example of concrete inconsistency is encountered when the aggregate sinks to a lower depth than the surface area. In addition, employed or embedded rebar or wire mesh is normally encountered at 3" and greater depths of the masonry or concrete, wherein these conditions increase the concrete psi at these levels. If rebar is encountered in a hole that is drilled in the masonry, multiple collars of an expansion device connected by a bridge will ensure expansion of at least one of the collars that is not in contact with the rebar. Collars on each size anchor are specifically spaced from each other so as to ensure maximum contact with the surface of the drilled hole in the concrete.

The tensile hardness of each respective of the bridge connecting the collars in relation to the hardness of the bolt affects the holding power or strength of the anchor, in that the bolt has to have a higher tensile strength than the collar, so as to prevent any galling of the bolt limiting further expansion.

### BRIEF DESCRIPTION OF THE DRAWINGS

Reference may now be made to the accompanying drawings, wherein:
Figure 1 illustrates, generally diagrammatically, a view of the expansion bolt with the wedge anchor arrangement of the invention, shown inserted into a masonry hole; and
Figures 2 through 4 illustrate diagrammatically various embodiments of the collar and bridge structure of the invention.

### DETAILED DESCRIPTION OF THE INVENTION

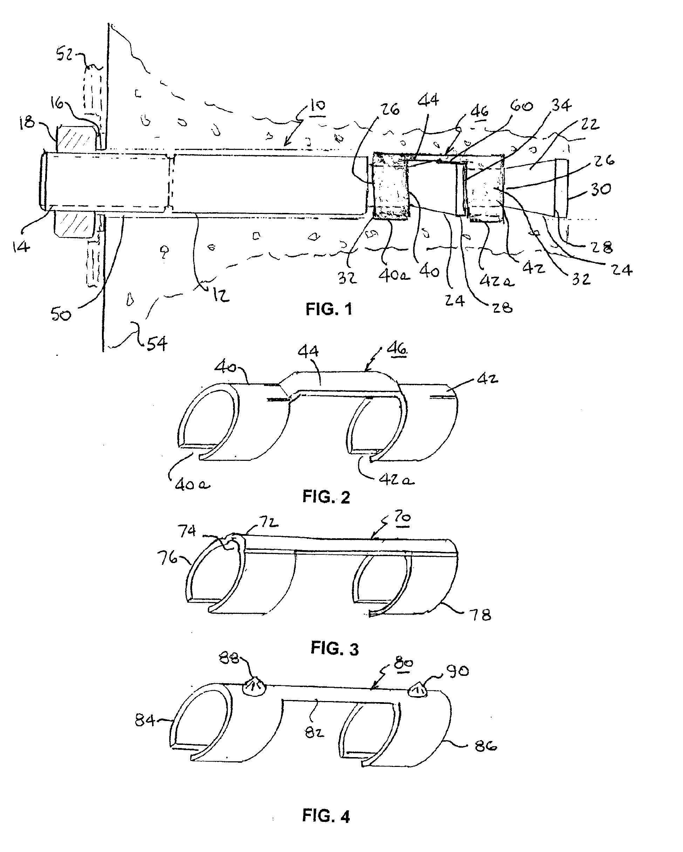

Referring in detail to Figure 1 of the drawings, there is diagrammatically represented an anchoring arrangement 10 pursuant to the invention. The arrangement 10 includes an elongate anchor bolt 12 having a screwthreaded end portion 14 adapted to receive thereon a washer 16 and a threaded nut 18.

Insertable into the opposite end of the anchor bolt, the latter of which is adapted to receive and mount a pair of axially spaced collar wedge anchors 20, 22, whereby these are attachable to bolt 12 in a manner similar to applicant's U.S. Patent No. 3,171,322, the disclosure of which is incorporated herein by reference.

As shown in the drawing, particularly in Figure 1, each of the collar wedge anchors 20, 22 consists of a tapered frustoconical portion 24 having the narrower end 26 thereof facing towards the screw threaded end 14 of the anchor bolt 12, and with the larger diameter end 28 extending into a ring-shaped segment 30 of constant diameter. The smaller end 26 of each frustoconical taper portion 24 extends into a cylindrical segment 32, with the segment 32 of upper wedge anchor 20 extending into the interior of anchor bolt 12, while the segment 32 of the endmost or lower wedge anchor 22 faces the end surface 34 of the larger diameter end 28 of wedge anchor 20.

The smaller segment 32 of each wedge anchor 20, 22 is encompassed by, respectively, annular collars 40, 42 having an open slit 40a, 42a, which are integrally formed with a strip or web member 44 so as to provide a bridge 46 connecting the two wedge anchors 20, 22.

Hereby, the function of the inventive collar wedge anchor arrangement is discussed in more extensive detail further on in connection with the various preferred embodiments of the novel bridge structures and configurations.

As can be ascertained from Figure 1 of the drawings, a suitable hole 50 is drilled into the concrete or masonry material 54, the hole having a diameter which is approximately that of the outside diameter of each of the layer cylindrical segments 30 of wedge anchors 20, 22. Thereupon, the anchor bolt 12 is tapped into the hole 50 until the washer 16 is flush with a fixture 52 that is located on the surface of the concrete 54.

After the anchoring arrangement 10 is inserted into the drilled hole 50 in the concrete 54, the bridge 46 secures and positions both collars 40, 42 inside the hole by bearing against the side wall 56 thereof. When the nut 18 is tightened on the anchor bolt 12, the collars 40, 42 in tandem expand over the respective tapers 24 of the wedge anchors. Due to this connection, the taper movement is identical for both wedge anchors. The radial loads, in turn, are synchronized to impart identical compression values on the concrete 54. An axial flat or groove 60 formed in taper 24 and the surface of segment 30 of anchor 20 captures the web 44 of bridge 46, thereby securing wedge anchors 20, 22 against relative rotation, and the depth of the flat or groove 60 determines a bridge thickness which locks the bridge 46 to the adjoining wall 56 of the drilled hole 50 so that this prevents rotation of the bridge. If the flat were not machined into the taper 24 and segment 30, then the thickness of the collar material would not allow the wedge anchor to enter the drilled hole. The flat 60 in the taper 24 and segment 30 may vary with each size of anchor employed. The depth of the flat 60 plus the thickness of the collar material determines the amount of resistance the wedge anchor will exert on the concrete so as to avoid rotation within the drilled hole 50. In addition, an allowance is normally made for bridge erosion which always occurs due to the friction between the inside hole wall 56 and the bridge 46. On longer length anchors, the depth of the flat 60 formed in the taper 24 and segment 30 decreases.

In this manner, bridge protrusion is maintained at all times guaranteeing non-rotation of the wedge anchor within the drilled hole 50. The width of the bridge web 44, as a rule is not less than 25% of the outer anchor diameter. The bridge protrusion, in addition to preventing rotation of the anchor, offers additional expansion anchor contact, thereby increasing the strength and the holding power of the anchor.

The width of the bridge 46 and collars 40, 42, as represented in Figure 2, adds additional expansion anchoring contact to the taper 24. This contact increases the holding power that is proportional to the bridge width, whereby the latter, a mentioned, can be increased up to 25% of the anchor bolt diameter. Bridge width and thickness are designed to prevent the rotation of the collars 40, 42 of the anchor, whereby if the bridge thickness did not have a mating flat on the taper 24 and segment 30" the anchor bolt 12 could not enter the drilled hole 50 in the concrete 54. The depth of the flat or groove 60 engages up to 75% of the thickness of the bridge material. This allows the bolt 12 of the anchoring device 10 to enter the drilled hole 50, and for the bridge to have sufficient bearing contact against the inside wall 56 of the drilled hole 50, such that this contact prevents the anchor from rotating and consequently allows for the expanding thereof.

Tensile loading of an expansion anchor is precipitated by anchor slippage. Slippage of more than 1/8" is indicative of anchor failure. The three areas of expansion anchor contact (the two tapers and the bridge) offer greater holding power than other dual wedge anchors; whereby this reduces the slippage factor considerably. The necked down area of the bolt where it meets the full body of the anchor is radiused. If it did not have a radius, a premature failure at this junction would most likely occur due to stress concentration factors.

Figure 3 of the drawings shows a modified bridge 70, wherein the elongate or axial center portion or web 72 is outwardly convexly curved, as illustrated at 74, along the full longitudinal length thereof extending at opposite ends thereof into collars 76, 78.

In Figure 4 of the drawings, the bridge 80 has a web 82 that is coextensive with the surface curvature of the collars 84, 86, the latter of which each have at least one raised dimple 88, 90 adapted to contact the wall 56 of the drilled hole 50 in the concrete.

The depth of the flat or groove 60 formed in taper 24 and segments 30 of anchor 20 serves multiple functions. A partial depth of the flat expands the respective bridge located therein to a greater diameter than the drilled hole 50. When the anchor bolt 12 is inserted in the concrete 54, this creates a frictional attachment between the bridge and inside the hole. This prevents the anchor from rotating in the hole, and consequently upon tightening of the nut 18, the anchor will expand. Another method of preventing anchor rotation is to mill a groove to the root diameter of the bolt 12. The bridge which is captured in this slot has one or more dimple protrusion along its length (Figure 4); whereby this prevents rotation of the anchor. These dimple protrusions may be created by coining the bridge in a stamping process, whereby this work hardens the bridge and prevents premature failure of the bridge due to the softness of the bridge metal. Another function of the multiple dimples is to secure the collars in a non-rotational manner in the hole 50. The lead or lower dimple will abrade as it scores the inside of the drilled hole as the anchor is driven home. The score line is then occupied by the following or upper unabraded dimple, and an anchorage is secured against rotation. Additional dimples and pinches can also be introduced in the collars.

In oversized holes, or masonry material with a low psi, such as concrete block or brick, rotation of the anchor is a problem. The collars must bear against the sides of the hole in order for the anchor to expand upon tightening of the nut. By inserting a screw driver or similar tool into the gap and spreading the collar, a friction contact is achieved allowing expansion of the anchor to occur. This feature allows the inventive anchor to operate with all masonry materials, whereas other wedge anchors are limited to work only in concrete.

Where copings and edge distance are critical, using the bridge as a guide, the anchor is inserted with the gap end into the hole facing the edge. The radial forces exerted by the anchor are now minimized in the edge area, thereby avoiding damage to the masonry.

Each size anchor has to be torqued to minimum foot-pounds in order to achieve maximum holding power in specific masonry materials. The following table represents the torque values required for installations in 3000 psi concrete.

| Anchor Diameter | Torque ft/lbs. |
|---|---|
| 1/4 " | 25-30 |
| 3/8 " | 50 - 60 |
| 1/2 " | 75-90 |
| 5/8 " | 150 - 175 |
| 3/4 " | 200 - 250 |
| 7/8 " | 250 - 300 |
| 1 " | 300 - 350 |
| 1 - 1/4" | 400 - 450 |

In masonry materials that are less than 3000 psi, such as brick, cinder block and grout filled block, the torque requirement necessary to install the anchor could cause a rotation problem. The resistance of the masonry is not sufficient to capture the collars of the anchor and, consequently, the anchor will rotate in the hole and the collars will not expand. For this reason, wedge anchors are normally not recommended for use in masonry materials less than 3000 psi. This shortcoming is overcome by using a collar material that is soft or dead soft, whereby this reduces the torque requirement and, in turn, the collars will easily expand.

Tests have shown the inventive double-wedge bridge design to provide for holding powers up to 50% greater than single wedge anchors. The failure mode has consistently been masonry failure. Greater holding power and virtually no slippage render this inventive anchor design ideal for use in areas that are prone or susceptible to seismic disturbances ; such as earthquakes.

While the present invention has been particularly shown and described with respect to preferred embodiments thereof, it will be understood by those skilled in the art that the foregoing and other changes in forms and details may be made without departing from the spirit and scope of the present invention. It is therefore intended that the present invention not be limited to the exact forms and details described and illustrated, but to fall within the spirit and scope of the appended claims.

## Claims

1. A masonry and concrete fastening device comprising an expansion dowel including an axially extending anchor bolt having a leading wedge anchor and a trailing wedge anchor in an axial tandem arrangement, each said wedge anchor having frustoconical portions widening towards the lower end of said expansion dowel and having cylindrical segments at the smaller and larger ends of each of said wedge anchors, a contacting structure comprising a pair of spaced collars extending one about each respective cylindrical segment at the smaller ends of the wedge anchors and a web member extending between said collars integrally formed therewith so as to form a bridge structure connecting said wedge anchors; a flat-like groove being formed in the surface of the cylindrical segment at the larger end of the trailing wedge anchor and contiguous frustoconical surface thereof, said bridge structure being receivable in said groove so as to inhibit any relative rotation between said wedge anchors during expansion of said dowel into an operative condition.

2. A fastening device as claimed in Claim 1, wherein said groove has a depth for receiving up to about 75% of the thickness of the material of the bridge structure when positioned therein.

3. A fastening device as claimed in Claim 1 or 2, wherein the width of said groove for receiving the bridge structure is up to about 25% of the external diameter of the wedge anchor.

4. A fastening device as claimed in Claim 1, 2 or 3, wherein said bridge structure is of an essentially flat shape between said collars.

5. A fastening device as claimed in one of the claims 1 to 4, wherein said bridge structure has an outwardly convexly curved configuration in transverse cross section intermediate said collars at the ends thereof.

6. A fastening device as claimed in one of the claims 1 to 5, wherein said connecting structure comprising said bridge structure and collars has at least one raised dimple formed in the bridge structure in the region of each of said collars.

7. A fastening device as claimed in one of the claims 1 to 6, wherein said bridge structure is adapted to be in a frictional contact with an interior wall surface of the drilled hole in said masonry upon insertion of the expansion dowel into the hole so as to inhibit rotation of said fastening device within said hole.
